# EUROPÄISCHE PATENTSCHRIFT

(11) **EP 1 234 548 B1**
(45) Veröffentlichungstag und Bekanntmachung des Hinweises auf die Patenterteilung: **17.05.2006**
(21) Anmeldenummer: 02003930.1
(22) Anmeldetag: 21.02.2002
(51) Int. Cl.: A61C 1/00

(54) **Medizinisches oder dentalmedizinisches Behandlungsinstrument mit einem Filterelement**
Medical or dental treatment instrument with a filter element
Instrument de traitement médical ou dentaire avec un élément filtrant

(30) Priorität: 22.02.2001 DE 10108565
(43) Veröffentlichungstag der Anmeldung: 28.08.2002
(73) Patentinhaber: Kaltenbach & Voigt GmbH, 88400 Biberach / Riss (DE)
(72) Erfinder: Lingenhöle, Bernhard, 88447 Warthausen (DE); Braun, Thomas, 82216 Maisach (DE); Braun, Anton, 88400 Biberach (DE)
(74) Vertreter: Schmidt-Evers, Jürgen

(56) Entgegenhaltungen:
- EP-A- 0 661 024
- EP-A- 0 976 366
- WO-A-99/22663
- DE-A- 3 906 063
- DE-A- 4 102 182
- US-A- 4 330 274
- US-A- 4 978 297
- US-A- 5 556 279

## Beschreibung

Die Erfindung bezieht sich auf ein medizinisches oder dentalmedizinisches Behandlungsinstrument sowie auf eine Filterpatrone hierfür.

Für vorliegende Behandlungsinstrumente ist die Baugröße beschränkt, um auch beengte Körperstellen behandeln zu können, wie es z. B. im Mundraum des menschlichen Körpers der Fall ist. Infolge dessen sind auch im Behandlungsinstrument verlaufende Medienleitungen mit einer möglichst geringen Querschnittsabmessung auszubilden. Dies gilt auch für wenigstens eine sich im Behandlungsinstrument von hinten nach vorne erstreckende Medienleitung. Deshalb neigt die Medienleitung eines vorliegenden Behandlungsinstruments bei einer Verschmutzung zu einer Verstopfung. Dies gilt auch dann, wenn in der Medienleitung eine Querschnittsverringerung, z. B. in Form einer Düse, vorhanden ist. Um solche Verstopfungen zu vermeiden, ist bereits vorgeschlagen worden, in den Medienkanal ein Filterelement demontierbar anzuordnen, das nach einer bestimmten Betriebszeit ausgetauscht werden kann.

In der US 5 971 757 A ist ein scheibenförmiges Filterelement zwischen zwei axial hintereinander angeordneten Teilen eines Behandlungsinstruments in einer Medienleitung angeordnet.

US 5 556 279 A zeigt eine sogenannte Filterpatrone für ein vorliegendes Behandlungsinstrument mit einem Filtergehäuse, das zwischen zwei Medienleitungsabschnitten montierbar ist und in dem zwischen zwei scheibenförmigen Filterelementen ein Desinfektionsmaterial angeordnet ist, wobei dieses Filterpaket vom Medium axial durchströmt wird.

Aus der DE 39 06 063 C2 ist ein zahnärzrliches Handstück mit einer Filterpatrone in einer Wasserleitung zu entnehmen, wobei das Handstück aus drei axial hintereinander angeordneten Handstückabschnitten besteht und die Filterpatrone im mittleren Handstückabschnitt angeordnet ist.

Aus der EP 0 661 024 A2 schließlich ist ein zahnärztliches Handstück bekannt, bei dem ein Filterelement durch ein flexibles Filtermaterial gebildet ist, welches mit seinem Rand zwischen den einander gegenüberliegenden Stirnseiten zweier Hülsenteile eines Handstücks eingeklemmt ist. Das Filtermaterial nimmt hierbei die Gestalt einer sich in Strömungsrichtung erstreckenden Filterhülse an.

Der Erfindung liegt die Aufgabe zugrunde, aus dem Stand der Technik bekannte Filterpatronen derart weiterzuentwickeln, daß eine kleine Baugröße der Filterpatrone sowie ein geringer Strömungswiderstand des Filterelements gewährleistet sind.

Diese Aufgabe wird durch die Merkmale des Anspruchs 1 gelöst. Vorteilhafte Weiterbildungen der Erfindung sind in den Unteransprüchen beschrieben.

Bei der erfindungsgemäßen Ausgestaltung nach Anspruch 1 weist das Filterelement die Form einer Hülse auf, wobei die Durchgangsrichtung des Medium durch das Filterelement quer zur Hülsenwand gerichtet ist. Bei dieser Ausgestaltung steht eine große Strömungsdurchgangsfläche für das Medium zur Verfügung, so daß der Strömungswiderstand verhältnismäßig klein ist. Dabei ist durch die Hülsenform des Filterelements eine kleine Querschnittsgröße gewährleistet, die sich auch in die beengten Raumverhältnisse eines vorliegenden Behandlungsinstruments vorteilhaft integrieren läßt. Der niedrige Strömungswiederstand wird ferner dadurch gewährleistet, daß die Filterhülse an einem Ende von einem Filterträger in der Form eines Ringflansches absteht, dessen Umfangsform und Größe an die Innenquerschnittsform und -größe des Patronengehäuses angepaßt und darin eingesetzt ist.

Weiterbildungen der erfindungsgemäßen Lösung ermöglichen ein einfaches und schnelles Anschließen bzw. Lösen der Filterpatrone an bzw. von zugehörigen Medienleitungsabschnitten. Hierzu eignen sich vorzugsweise Steckverbindungen, die durch ein axiales Verschieben der Filterpatrone und eines Einsatzteils handhabungsfreundlich und schnell montierbar bzw. lösbar sind. Die Steckverbindungsteile können hierzu an einem Ende durch einen Steckzapfen mit einem Durchgangskanal und am anderen Ende durch eine Steckausnehmung oder an beiden Enden durch Steckausnehmungen gebildet sein, wobei der Steckzapfen in seiner Querschnittsgröße vorzugsweise kleiner ist als das Patronengehäuse und durch eine Gehäusestirnwand mit der Umfangswand des Patronengehäuses verbunden ist.

Eine andere Weiterbildung betrifft ein medizinisches oder dentalmedizinisches Behandlungsinstrument mit einer erfindungsgemäßen Filterpatrone, wobei die Anordnung und Montierbarkeit bzw. Demontierbarkeit der Filterpatrone verbessert werden soll. Hierzu ist in einem vorderen Handstückteil und/oder in einem darin von hinten wenigstens teilweise einsetzbaren Einsatzteil ein Freiraum angeordnet, dessen seitliche Öffnung durch eine von hinten aufgesteckte Verbindungshülse abgedeckt ist und bei zurückgeschobener Verbindungshülse offen ist, wobei durch die Öffnung eine in die Medienleitung montierbare Filterpatrone in den Freiraum einsetzbar und wieder entnehmbar ist. Diese Ausgestaltung ermöglicht eine Anordnung der Filterpatrone, die zum einen innen vor Verunreinigungen und Beschädigung geschützt angeordnet ist und zum anderen leicht zugänglich ist, z. B. zwecks Reinigung oder Austausch.

Nachfolgend wird die Erfindung anhand von vorteilhaften Ausgestaltungen eines Ausführungsbeispiel näher erläutert. Es zeigt
- Fig. 1: ein erfindungsgemäßes Behandlungsinstrument in der Seitenansicht;
- Fig. 2: den hinteren Teil des Behandlungsinstruments in einer Montagezwischenstellung eines Einsatzteiles teilweise geschnitten;
- Fig. 3: den hinteren Teil des Behandlungsinstruments in einer Montagezwischenstellung einer Filterpatrone;
- Fig. 4: die Filterpatrone im axialen Schnitt in vergrößerter Darstellung;
- Fig. 5: den die Filterpatrone aufnehmenden Bereich des Behandlungsinstruments in abgewandelter Ausgestaltung;
- Fig. 6: Demontage der Filterpatrone bei der Ausgestaltung nach Fig. 5;
- Fig. 7: den die Filterpatrone aufnehmenden Bereich des Behandlungsinstruments in weiter abgewandelter Ausgestaltung und in prinzipieller sowie vergrößerter Demontage;
- Fig. 8: den die Filterpatrone aufnehmenden Bereich des Behandlungsinstruments nach Fig. 7 in der Montagestellung.

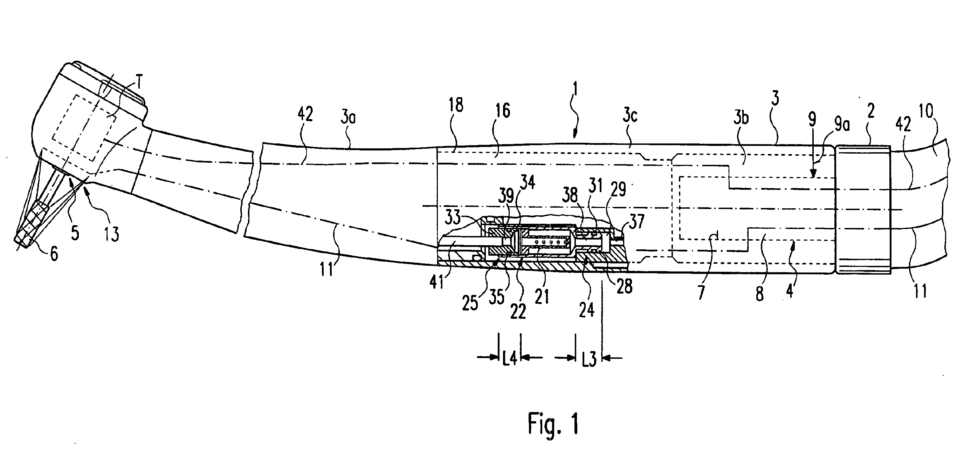

Das in Fig. 1 in seiner Gesamtheit mit 1 bezeichnete Behandlungsinstrument besteht aus einem hinteren Instrumententeil, nämlich einem sogenannten Anschlußteil 2 und einem vorderen Instrumententeil, nämlich einem sogenannten Handstück 3, die durch eine Steckkupplung 4, insbesondere eine Steck/Dreh-Kupplung, lösbar miteinander verbunden sind. Beim vorliegenden Ausführungsbeispiel ist am vorderen Ende des Behandlungsinstruments 1 eine Haltevorrichtung 5 für ein Werkzeug 6 angeordnet, wobei das Werkzeug 6 seitlich oder nach vorne abstehen kann. Das Handstück 3 kann sich gerade oder seitlich gekrümmt oder winkelförmig erstrecken. Die Steck/Dreh-Kupplung wird durch eine im Querschnitt runde Kupplungsausnehmung 7 und einen darin mit geringem Bewegungsspiel einsteckbaren Kupplungszapfen 8 gebildet. Beim vorliegenden Ausführungsbeispiel ist die Kupplungsausnehmung 7 am hinteren Ende des Handstücks 3 angeordnet, und der im wesentlichen zylindrische Kupplungszapfen 8 erstreckt sich vom Anschlußteil 2 nach vorne. Im gekuppelten Zustand sind die Kupplungsausnehmung 7 und der Kupplungszapfen 8 durch eine Verrastungsvorrichtung 9 lösbar miteinander verrastet. Diese weist ein Verrastungselement 9a auf, das in dem einen Kupplungsteil radial beweglich gelagert und durch eine Federkraft in eine die Teilungsfuge durchsetzende Verrastungsstellung vorgespannt ist, in der das Verrastungselement in eine Ringnut im anderen Kupplungsteil einfaßt. Eine solche Verrastungsvorrichtung ist durch eine manuelle Zugkraftausübung überdrückbar, wobei das Verrastungselement selbsttätig in seine Freigabestellung verdrängt wird.

Das Anschlußteil 2 ist mit einer flexiblen Versorgungsleitung verbunden, die mit einem nicht dargestellten Steuergerät verbunden ist. Das Handstück 3 ist vorzugsweise auf dem Kupplungszapfen 8 frei drehbar gelagert, wodurch die Handhabbarkeit verbessert wird. Durch die Steck/Dreh-Kupplung erstreckt sich wenigstens eine Medienleitung 11 für ein Behandlungsmedium, z. B. Wasser, Druckluft oder ein Wasser/Luft-Gemisch (Spray). Die Medienleitung 11 erstreckt sich axial oder Z-förmig durch eine radiale (nicht dargestellt) oder hohlzylindrische Teilungsfuge zwischen der Kupplungsausnehmung 7 und dem Kupplungszapfen 8, wobei die Medienleitung 11 die Teilungsfuge im Bereich einer Ringnut im Kupplungszapfen 8 oder in der Kupplungsausnehmung 7 durchsetzt, so daß in jeder Drehstellung der Mediendurchgang gewährleistet ist. Beiderseits vom Durchgang ist die Teilungsfuge durch einen Dichtring abgedichtet, der in einer Ringnut in der Wandung der Kupplungsausnehmung 7 oder in der Mantelfläche des Kupplungszapfens 8 angeordnet sein kann. Hierdurch ist eine freie Drehbarkeit um 360 ° und mehr gewährleistet. Die Medienleitung 11 erstreckt sich vom hinteren Ende des Behandlungsinstruments zu dessen vorderem Endbereich, wobei sie teilweise als Kanal im Instrumentenkörper oder als Schlauch- bzw. Rohrleitung verlaufen kann. Die Medienleitung 11 mündet im vorderen Endbereich des Behandlungsinstruments 1 aus diesem aus, wobei diese Mündungsöffnung 13 auf die Behandlungsstelle bzw. auf die Spitze des Werkzeugs 6 gerichtet ist.

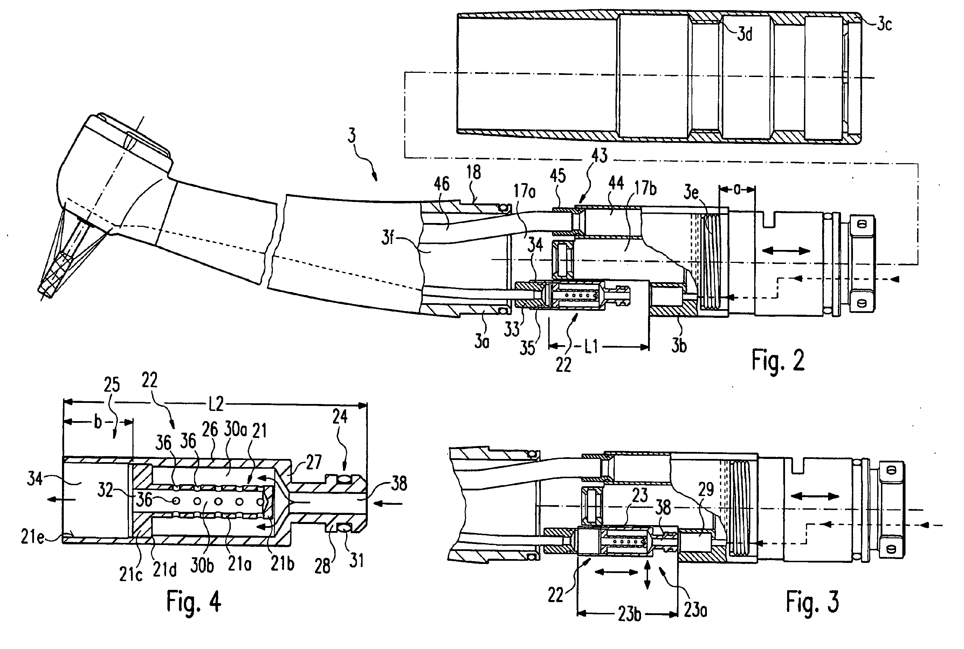

Beim vorliegenden Ausführungsbeispiel ist der hintere Endbereich des Handstückkörpers dreiteilig ausgebildet, nämlich mit einem verjüngten und in der Längsrichtung gabelförmig geschlitzten Tragzapfen 16, der einteilig vom vorderen Handstückteil 3a nach hinten ragt, einem von hinten teilweise in den axialen Schlitz 17 a des Tragzapfens 16 einsteckbaren Einsatzteil 3b und einer Verbindungshülse 3c, die von hinten aufsteckbar ist, in der montierten Stellung das Einsatzteil 3b umgibt, mit ihrem vorderen Endbereich eine stufenförmige Verjüngung 18 im hinteren Endbereich des Handstückteils 3a ausfüllt und mit einem Innengewindeabschnitt 3d in ihrem mittleren Bereich mit Außengewindeabschnitten 3e an den hinteren Gabelenden des Einsatzteils 3b verschraubt ist. Das Einsatzteil 3b ist von besonderer und an die mit ihm verbundenen Teile angepaßter Bauform. Es ist mit einem vorderen verjüngten Steg 17b in den Schlitz 17a verschiebbar. Im vorliegenden Zusammenhang ist wesentlich, daß das Einsatzteil 3b bei abgenommener Verbindungshülse 3c zwischen einer vorderen Endstellung gemäß Fig. 1 und einer hinteren Montagezwischenstellung gemäß Fig 2 und 3 axial verschiebbar und durch im einzelnen nicht dargestellte Anschläge begrenzt ist. Die Verschiebelänge ist mit a bezeichnet. Außerdem ist die Kupplungsausnehmung 7 im Einsatzteil 3b angeordnet.

Beim erfmdungsgemäßen Behandlungsinstrument 1 ist in der Medienleitung 11 ein Filterelement 21 zum Filtern von Verunreinigungen im Behandlungsmedium angeordnet. Das Filterelement 21 ist austauschbar angeordnet, vorzugsweise in einer Filterpatrone 22, deren Enden durch Steckverbindungen 24, 25 mit den zugehörigen Medienleitungsabschnitten verbindbar sind. Das Filterelement 21 ist vorzugsweise im sich im Handstück 3 erstreckenden Abschnitt der Medienleitung 11 angeordnet, nämlich stromab der Steck/Dreh-Kupplung. Das Filterelement 21 kann jedoch auch im sich im Anschlußteil 2 erstreckenden Medienleitungsabschnitt angeordnet sein. Die Anordnung stromab der Steck/Dreh-Kupplung ist deshalb von Vorteil, weil ein durch das An- und Abkuppeln oder Drehen entstehender Abrieb an den Kupplungs- und Dichtungselementen vom Filterelement 21 aus dem Medium ausgefiltert werden kann.

Beim vorliegenden Ausführungsbeispiel bildet der Schlitz 17a und/oder eine Ausnehmung 23 im Einsatzteil 3b einen, gegebenenfalls gemeinsamen offenen Freiraum 23a, dessen Länge L1 in der ausgeschobenen Montagezwischenstellung mit einem Bewegungsspiel größer bemessen ist, als die Länge L2 der Filterpatrone 22 und dessen seitliche Öffnung durch die aufgeschobene Verbindungshülse 3c abgedeckt bzw. geschlossenn ist und in deren zurückgezogener Stellung offen und von außen zugänglich ist. Die beiden axialen Enden der Filterpatrone 22 sind jeweils durch eine Steckverbindung 24, 25 hinten mit dem Einsatzteil 3b und vorne mit dem vorderen Handstückteil 3a bzw. einem Anbauteil desselben lösbar verbindbar. Die Summe der Steckverbindungslängen L3, L4 ist gleich oder kleiner bemessen als die Verschiebelänge L5 des Einsatzteils 3b. Hierdurch ist es möglich, die Filterpatrone 22 in der Montagezwischenstellung des Einsatzteils 3b radial einwärts in die Nische 23 einzusetzen und durch eine nach hinten oder nach vorne gerichtete Bewegung in der einen oder in der anderen Steckverbindung 24, 25 mit dem Handstückteil 3a oder mit dem Einsatzteil 3b zu verbinden (Fig. 2). Beim Verschieben des Einsatzteils 3b in seine Endstellung gemäß Fig. 1 wird dann auch die jeweils andere Steckverbindung selbsttätig und dicht verschlossen.

Beim vorliegenden Ausführungsbeispiel besteht die Filterpatrone 22 aus einem rohrförmigen Patronengehäuse 26 mit einer Stirnwand 27 an seinem hinteren Ende, von der ein zylindrischer Steckzapfen 28 nach hinten absteht, dem im Einsatzteil 3b eine passende Steckausnehmung 29 zugeordnet ist. Durch ein Zusammenschieben dieser Steckverbindungsteile läßt sich die hintere Steckverbindung 24 schließen, wobei sie durch einen Dichtring 31 in einer Ringnut abgedichtet ist, die vorzugsweise im Steckzapfen 28 angeordnet ist. In einem der Steckverbindungslänge L4 entsprechenden Abstand b vom hinteren Ende des Patronengehäuses 26 ist darin das Filterelement 21 in Form einer Hülse koaxial so angeordnet und fixiert, daß das Medium die vorzugsweise hohlzylindrische Hülsenwand 21a radial, d. h. von innen nach außen oder von außen nach innen, durchströmt. Beim vorliegenden Ausführungsbeispiel ist die Hülsenwand 21a an einem Ende, hier am hinteren Ende, durch eine Stirnwand 21b zu einem topfförmigen Körper geschlossen, die einen Abstand von der Stirnwand 27 aufweist. Das andere, hier vordere Ende der Hülsenwand 21a ist an einem scheibenförmigen Filterträger 21c befestigt, der die Form eines Ringflansches aufweisen kann, dessen Umfangsform und Größe an die Innenquerschnittsform und -größe des Patronengehäuses 26 angepaßt und darin eingesetzt und axial fixiert ist, z. B. durch Kleben oder Preßsitz. Zur Begrenzung des Filterträgers 21c gegen eine Verschiebung im Patronengehäuse 26 nach hinten, kann eine Schulterfläche 21d vorgesehen sein, an der der Filterträger 21c anliegt. Die Innenquerschnittsgröße des Patronengehäuses 26 kann in dem Filterträger 21c vorgeordneten Endabschnitt durch eine Erweiterung 21e vergrößert sein, so daß beim Montieren der Filterträger 21c im Bereich der Erweiterung 21e leicht einschiebbar ist.

Die vordere Steckverbindung 25 wird durch den vorderen Endbereich des Innenraums des Patronengehäuses 26, hier durch die Erweiterung 21e, und einen passenden Steckzapfen 33 am Handstückteil 3a gebildet. Beim vorliegenden Ausführungsbeispiel ist der Steckzapfen 33 an einer oder an beiden den Schlitz 17 begrenzenden Gabeln des Handstückteils 3a befestigt, vorzugsweise einteilig angeformt. Im axial zusammengeschobenen Zustand des Steckzapfens 33 und der Steckausnehmung 34 ist die vordere Steckverbindung 25 geschlossen und durch einen Dichtring 35, vorzugsweise einen O-Ring, in einer Ringnut abgedichtet, die vorzugsweise in der Mantelfläche des Steckzapfens 33 angeordnet ist.

Beim vorliegenden Ausführungsbeispiel ist das Filterelement 21 mit seiner Hülsenwand 21a einteilig am Filterträger 21c angeformt. Es ist jedoch auch eine zweiteilige Ausgestaltung möglich.

Wenigstens die Hülsenwand 21a besteht aus einem für das Medium durchlässigen, z. B. porösem, Filtermaterial. Zusätzlich oder anstelle dieser Durchlässigkeit können in der Hülsenwand 21a kleine Durchgangslöcher 36 angeordnet sein, von denen mehrere, z. B. fünf Stück, in der Längsrichtung hintereinander angeordnet sind und vorzugsweise auch mehrere auf den Umfang verteilt angeordnet sind. Hierdurch erhält das Filterelement 21 die Bauweise und Funktion eines Siebes, das ein grobes Filterelement bildet und deshalb aus Vereinfachungsgründen durch den Begriff Filterelement definiert wird. Das heißt, das Filterelement 21 kann aus einem für das Medium durchlässigen oder undurchlässigen Material jeweils mit oder ohne eingearbeitete Durchgangslöcher 36 bestehen.

Beim vorliegenden Ausführungsbeispiel bestehen das Patronengehäuse 26 und das einstückig mit dem Filterträger 21c ausgebildete Filterelement 21 aus Kunststoff.

Im Funktionsbetrieb strömt das Medium nach einem Öffnen eines z. B. dem Steuergerät zugeordneten Ventils in der Mediumleitung 11 durch die Versorgungsleitung zum Behandlungsinstrument 1, in dem es durch einen Kanal 37 in die Steckausnehmung 29 und durch einen Kanal 38 im Steckzapfen 33 in den die Hülsenwand 21a und die Stirnwand 21b umgebenden äußeren Hohlraum 30a des Patronengehäuses 26 gelangt, von dem es radial nach innen durch die Hülsenwand 21a in einen inneren Hohlraum 30b strömt und dann durch Kanäle 32, 39 im Filterträger 21c und im vorderen Steckzapfen 33 nach vorne weiterströmt. Der Kanal 39 kann mit einem weiterführenden Schlauch 41 im Hohlraum 3f des als Griffhülse ausgebildeten Handstückteils 3a dadurch verbunden sein, daß der Schlauch 41 in den Kanal 39 eingesetzt und dicht verbunden ist, z. B. durch Kleben. Aufgrund der Hülsenform des Filterelements 21 läßt sich ein verhältnismäßg großer Durchströmungsbereich des Filterelements 21 verwirklichen, so daß sich ein verhältnismäßig geringer Strömungswiderstand für das Medium ergibt und der Druckverlust am Filterelement 21 gering ist. Diese Bauform ist vorteilhaft, weil bei einem Behandlungsinstrument 1 bzw. Handstück 3 in der Längsrichtung hinreichend Raum zur Verfügung steht, jedoch nicht in der Querrichtung. Da das Filterelement 21 in der Querrichtung klein ausgebildet werden kann, läßt sich auch eine kleine Querabmessung für das Behandlungsinstrument 1 bzw. das Handstück 3 verwirklichen.

Nach einer bestimmten Funktionszeit ist es zur Vermeidung einer Verstopfung des Filterelements 21 vorteilhaft, dieses auszutauschen. Hierzu werden die Verbindungshülse 3c durch Lösen des Gewindeeingriffs abgeschraubt, das Einsatzteil 3b in seine hintere Montagezwischenstellung (Fig. 2) verschoben und die Filterpatrone 22 entnommen sowie eine neue Filterpatrone 22 eingesetzt, das Einsatzteil 3b in seine Endstellung (Fig. 1) verschoben und die Verbindungshülse 3c aufgeschraubt.

Beim vorliegenden Ausführungsbeispiel ist das Behandlungsinstrument 1 eine sogenannte Turbine mit einem angedeuteten Turbinenantrieb T im vorderen Endbereich, der durch Druckluft angetrieben wird, die ihm durch eine weitere Mediumleitung 42 zugeführt wird, die die Steck/Dreh-Kupplung ebenfalls Z-förmig im vorbeschriebenen Sinne durchsetzt und im Verbindungsbereich zwischen dem Einsatzteil 3b und dem Handstückteil 3a eine Steckverbindung 43 aufweist mit einer Steckausnehmung 44, hier im Einsatzteil 3b, und einem Steckzpafen 45, hier z. B. am Handstückteil 3a, der beim Verschieben des Einsatzteils 3b in seine Endstellung in die Steckausnehmung 44 einschiebbar und durch einen Dichtring abgedichtet ist. Diese Steckverbindung 43 ist vorzugsweise so ausgebildet, daß sie auch in der Montagezwischenstellung nicht gelöst, sondern verbunden bleibt, wobei der Steckzapfen 45 wenigstens teilweise in der Steckausnehmung 44 sitzt (Fig. 2). Der vom Steckzapfen 45 nach vorne weiterführende Medienleitungsabschnitt kann ebenfalls durch einen Schlauch 46 gebildet sein. Wenn die vorbeschriebenen vorderen Mediumleitungsabschnitte aus hinreichend stabilem Rohr, z. B. Metallrohr, bestehen, können die Steckzapfen 33, 45 freie, also nicht mit dem Handstückteil 3a verbundene Teile sein, die aufgrund ihrer Verbindung mit den Rohrleitungen hinreichend stabil gehalten sind.

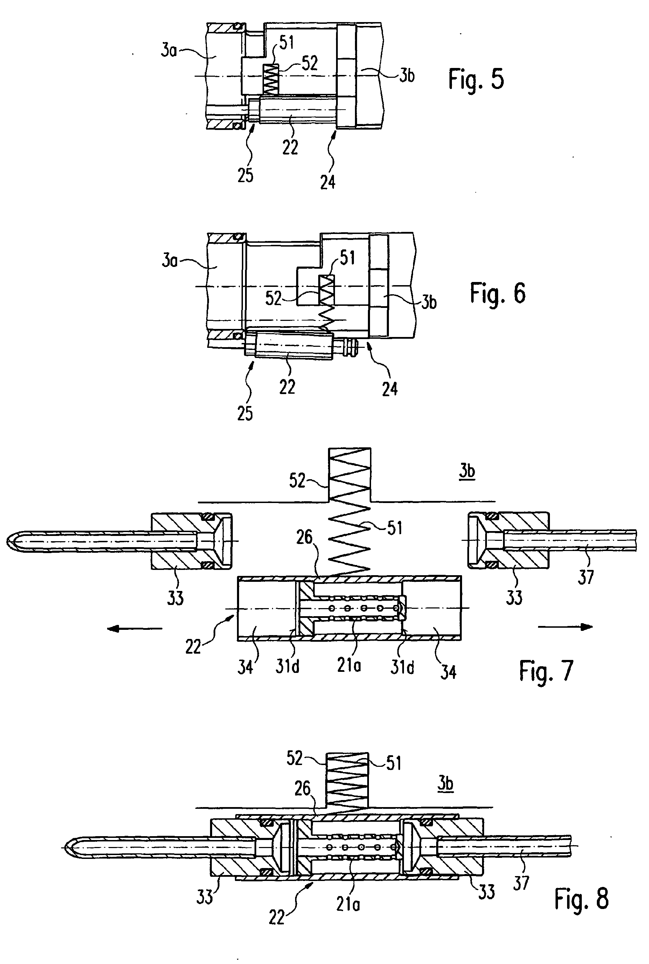

Das Ausführungsbeispiel nach Fig. 5, bei dem gleiche oder vergleichbare Teile mit gleichen Bezugszeichen versehen sind, unterscheidet sich von den vorbeschriebenen Ausführungsbeispielen dadurch, daß die Filterpatrone 22 in ihrer Montagestellung unter einer Federspannung steht, die sie radial nach außen vorspannt, so daß dann, wenn das Handstückteil 3a und das Einsatzteil 3b axial auseinandergezogen werden und die Filterpatrone 22 an einer oder an beiden Steckverbindungen 24, 25 vom Handstückteil 3a und/oder vom Einsatzteil 3b getrennt wird, die Filterpatrone 22 durch die Federkraft radial nach außen verlagert wird, und zwar in eine Position, in der sie handhabungsfreundlich ergriffen und entfernt oder aus der zweiten Steckverbindung gelöst werden kann. Hierzu ist eine Feder 51, insbesondere eine Druckfeder, vorgesehen, die beim seitlich einwärts nach innen gerichteten Einsetzen der Filterpatrone 22 gespannt wird und die Filterpatrone 22 nach dem vorbeschriebenen Lösen an wenigstens einem Ende seitlich nach außen kippt oder bei beidendiger Lösung auslagert. Die Feder 51 kann mittig oder in einem Endbereich der Filterpatrone 22 wirksam sein, so daß sie unter der Federspannung parallel nach außen verlagert wird oder nach außen gekippt wird. Beim Ausführungsbeispiel nach Fig. 5 ist eine Druckfeder 51 in Form einer Wendelfeder vorgesehen, die in einer Federausnehmung 52 im Einsatzteil 3b eingesetzt ist und mit ihrem freien Ende im vorderem Endbereich der Filterpatrone 22 angreift und es permanent radial nach außen beaufschlagt. Die Federkraft ist so groß, daß sie die Filterpatrone 22 nach außen zu verschieben vermag, jedoch keine Beschädigungen an der Filterpatrone 22 hervorzurufen vermag. Beim Auseinanderziehen des Handstückteils 3a und des Einsatzteils 3b kann die Feder 51 in dem mittlerem Bereich des Filterpatrone 22 gelangen. Beim Ausführungsbeispiel nach Fig. 5 und 6 gelangt die Feder 51 durch das axiale Auseinanderziehen der Handstückteile in den hinteren Bereich des Filterpatrone 22, wobei diese aus der Stecknahmeverbindung 24 gelöst und um die nicht gelöste Stecknahmeverbindung 25 nach außen gekippt wird. In dieser Stellung kann die Filterpatrone 22 handhabungsfreundlich auch aus der Stecknahmeverbindung 25 herausgezogen werden und nach einer Behandlung bzw. Reinigung oder einem Austausch in der Stecknahmeverbindung 25 wieder verbunden werden. Danach kann die Filterpatrone 22 manuell in ihre Montageposition eingeschwenkt werden, wobei die Feder 51 gespannt wird, und es können die Handstückteile axial zusammengeschoben werden, wobei die Steckverbindung 24 geschlossen wird und die Montage der Filterpatrone 22 fertig gestellt wird.

Das Ausführungsbeispiel nach Fig. 7 und 8, bei dem gleiche oder vergleichbare Teile ebenfalls mit gleichen Bezugszeichen versehen sind, unterscheidet sich von den vorbeschriebenen Ausführungsbeispielen in zweierlei Hinsicht.

Zum einen steht die Filterpatrone 22 unter der Spannung einer an ihr zumindest in der beidendigen Freigabestellung mittig angreifenden Feder 51. Da die Filterpatrone 22 an beiden Enden von den Steckverbindungen 24, 25 gelöst ist, kann sie durch die Feder 51 nach außen parallel verschoben werden und zwar sowohl beim Verschieben nach außen bei der Demontage als auch beim Verschieben nach innen bei der Montage. Wie bereits vorbeschrieben, kann auch hier das Lösen und Verbinden der Steckverbindungen 24, 25 durch das axiale Auseinanderziehen und Zusammenschieben der Handstückteile, hier des Handstückteils 3a und des Einsatzteils 3b, erfolgen.

Zum andern unterscheidet sich die Filterpatrone 22 dadurch von den vorbeschriebenen Ausführungsbeispielen, dass sie an beiden Enden im Sinne der Steckverbindung 25 ausgebildet ist. Das Gehäuse der Filterpatrone bzw. das Patronengehäuse 26 kann bei dieser Ausgestaltung aus einer Hülse bestehen, die auch an ihrem der Steckverbindung 24 zugewandtem Ende eine Steckausnehmung 34 aufweist, in die ein Steckzapfen 33 dicht einsteckbar ist, der mit einem Rohr- oder Schlauchleitungsabschnitt verbunden und dem Einsatzteil 3b zugeordnet ist, wie es bereits für den Steckzapfen 33 der Steckverbindung 25 beschrieben worden ist. Die Einstecktiefe für den Steckzapfen 33 kann auch an diesem hinteren Ende des Filter- bzw. Patronengehäuses 26 durch eine Schulterfläche 21d begrenzt sein.

Das erfindungsgemäße Filterelement 21 eignet sich gleich gut auch für medizinische oder dentalmedizinische Behandlungsinstrumente 1 anderer Bauweise und Funktion, z. B. für ein Spritz- oder Blashandstück oder für eine Sonde mit einer Medien-, insbesondere Wasser- oder Spray-Zuführungsleitung.

## Patentansprüche

1. a) Filterpatrone (22)
b) für eine sich in einem medizinischen oder dentalmedizinischen Behandlungsinstrument (1) von dessen hinteren Ende zu dessen vorderen Endbereich erstreckende Medienleitung (11),
c) wobei die Filterpatrone (22) ein rohrförmiges Patronengehäuse (26) aufweist, in dem ein Filterelement (21) angeordnet ist,
d) wobei das Filterelement (21) die Form einer Filterhülse aufweist,
d1) die an ihrem einen Ende durch eine Stirnwand (21b) geschlossen ist
d2) und an ihrem anderen Ende in der Längsrichtung der Filterpatrone (22) von einem Filterträger (21c) in der Form eines Ringflansches absteht, dessen Umfangsform und Größe an die Innenquerschnittsform und -größe des Patronengehäuses (26) angepaßt und darin eingesetzt ist und der einen mit dem Innenraum (30d) der Filterhülse verbundenen Durchgangskanal (32) aufweist,
e) und wobei die Durchgangsrichtung des Mediums quer zur Hülsenwand (21a) gerichtet ist.

2. Filterpatrone nach Anspruch 1,
**dadurch gekennzeichnet,**
**dass** an den Enden des Filterpatronengehäuses (26) Steckverbindungsteile angeordnet sind, die mit den zugehörigen Abschnitten der Medienleitung (11) verbindbar bzw. verbunden sind.

3. Filterpatrone nach Anspruch 2,
**dadurch gekennzeichnet,**
**dass** die Steckverbindungsteile an einem Ende durch einen Steckzapfen (28) mit einem Durchgangskanal (38) und am anderen Ende durch eine Steckausnehmung (34) oder an beiden Enden durch Steckausnehmungen (34) gebildet sind.

4. Filterpatrone nach Anspruch 3,
**dadurch gekennzeichnet,**
**dass** der Steckzapfen (28) in seiner Querschnittsgröße kleiner ist als das Patronengehäuse (26) und durch eine Gehäusestimwand (27) mit der Umfangswand des Patronengehäuses (26) verbunden ist

5. Filterpatrone nach Anspruch 3 oder 4,
**dadurch gekennzeichnet,**
**dass** die Steckausnehmung (34) durch eine Umfangswand des Patronengehäuses (26) gebildet ist.

6. Filterpatrone nach einem der vorhergehenden Ansprüche,
**dadurch gekennzeichnet,**
**dass** die Hülsenwand (21a) aus einem für das Medium durchlässigen, z. B. porösen, Filtermaterial besteht und/oder mehrere Durchgangslöcher (36) aufweist, die in Längsrichtung hintereinander und auf dem Umfang verteilt angeordnet sind.

7. Medizinisches oder dentalmedizinisches Behandlungsinstrument (1)
mit einer sich von seinem hinteren Ende zu seinem vorderen Endbereich erstreckenden Medienleitung (11), insbesondere für Wasser oder Spray,
und mit einem austauschbaren rohrförmigen Patronengehäuse (26), in dem ein Filterelement (21) für die Medienleitung (11) angeordnet ist,
**gekennzeichnet durch**
eine Filterpatrone (22) nach einem der vorherigen Ansprüche, welche das Patronengehäuses (26) mit dem Filterelement (21) aufweist.

8. Behandlungsinstrument nach Anspruch 7,
**dadurch gekennzeichnet,**
**dass** es ein hinteres Anschlussteil (2) und ein vorderes Handstück (3) aufweist, die durch eine Steckkupplung (4) lösbar miteinander verbunden sind,
wobei die Steckkuplung (4) zwischen dem Anschlussteil (2) und einem Einsatzteil (3b) im Handstück (3) ausgebildet ist, das durch eine von hinten aufsteckbare und nach hinten abnehmbare Verbindungshülse (3c) mit dem Handstück (3) verbindbar ist und bei nach hinten zurückgeschobener Verbindungshülse (3c) zwischen einer hinteren Montagezwischenstellung und einer vorderen Endstellung axial verschiebbar ist,
wobei im vorderen Handstückteil (3a) und/oder im Einsatzteil (3b) ein Freiraum (23a) angeordnet ist, dessen seitliche Öffnung (23b) durch die aufgesteckte Verbindungshülse (3c) abgedeckt ist und bei zurückgeschobener Verbindungshülse (3c) offen ist,
und wobei durch die Öffnung (23b) die in die Medienleitung (11) montierbare Filterpatrone (22) in den Freiraum (23a) einsetzbar und wieder entnehmbar ist.

9. Behandlungsinstrument nach Anspruch 8,
**dadurch gekennzeichnet,**
**dass** die Medienleitung (11) sich durch das Einsatzteil (3b) erstreckt und eine stromaufseitige Steckverbindung (24) zwischen der Filterpatrone (22) und dem Einsatzteil (3b) gebildet ist.

10. Behandlungsinstrument nach Anspruch 8 oder 9,
**dadurch gekennzeichnet,**
**dass** die Filterpatrone (22) unter einer seitlichen nach außen gerichteten Federspannung steht, die die Filterpatrone (22) bei ihrer Demontage, insbesondere beim Auseinanderziehen der Instrumententeile oder Handstücksteile (3a, 3b) nach außen verlagert oder kippt.

## Claims

1. a) Filter cartridge (22)
b) for a media line (11) extending in a medical or dental-medical treatment instrument (1) from its rearward end to its forward end region,
c) wherein the filter cartridge has a tube-shaped cartridge housing (26) in which a filter element (21) is arranged,
d) wherein the filter element (21) has the form of a filter sleeve,
d1) which at its one end is closed by an end wall (21b)
d2) and at its other end in the longitudinal direction of the filter cartridge (22), stands up from a filter carrier (21c) in the form of a ring flange, the circumferential shape and size of which is adapted to the inner cross-sectional shape and size of the cartridge housing (26) and is placed therein, and which has a through channel (32) connected with the inner space (30d) of the filter sleeve,
e) and wherein the direction of passage of the medium is directed transversely to the sleeve wall (21a).

2. Filter cartridge according to claim 1,
**characterised in that**,
plug connection parts are arranged at the ends of the filter cartridge housing (26), which are connected or connectable with the associated sections of the media line (11).

3. Filter cartridge according to claim 2,
**characterised in that**,
the plug connection parts are formed at one end by means of a plug pin (28) having a through channel (38) and at the other end by means of a plug recess (34), or are formed at both ends by means of plug recesses (34).

4. Filter cartridge according to claim 3,
**characterised in that**,
the plug pin (28) is smaller in its cross-sectional size than the cartridge housing (26) and is connected with the circumferential wall of the cartridge housing (26) by means of a housing end wall (27).

5. Filter cartridge according to claim 3 or 4,
**characterised in that**,
the plug recess (34) is formed by means of a circumferential wall of the cartridge housing (26).

6. Filter cartridge according to any preceding claim,
**characterised in that**,
the sleeve wall (21a) is of a filter material which is permeable for the medium, e.g. porous, and/or has a plurality of through-holes (36) which in the longitudinal direction are arranged one behind another and arranged distributed over the circumference.

7. Medical or dental-medical treatment instrument (1) having a media line (11), in particular for water or spray, extending from its rearward end to its forward end region, and
having an exchangeable tube-shaped cartridge housing (26) in which a filter element (21) for the media line (11) is arranged,
**characterised by** a filter cartridge (22) as claimed in any preceding claim, having the cartridge housing (26) with the filter element (21),

8. Treatment instrument according to claim 7,
**characterised in that**,
it has a rearward connection part (2) and a forward handpiece (3), which are releasably connected with one another by means of a plug coupling (4),
wherein the plug coupling is formed between the connection part (2) and an insert part (3b) in the handpiece (3), which is connectable with the handpiece (3) by means of a connection sleeve (3c), which sleeve can be mounted from the rear and removed to the rear, and which insert part is, with rearwardly drawn back connection sleeve (3c), axially displaceable between a rearward mounting intermediate position and a forward end position,
wherein there is arranged in the forward handpiece part (3a) and/or in the insert part (3b) a free space (23a) the lateral opening (23b) of which is covered over by means of the mounted connection sleeve (3c) and is opened with drawn back connection sleeve (3c),
and wherein the filter cartridge (22) mountable in the media line (11) can be put in place, and again removed, through the opening (23b) into the free space (23a).

9. Treatment instrument according to claim 8,
**characterised in that**,
the media line (11) extends through the insert part (3b) and an up-stream plug connection (24) is formed between the filter cartridge (22) and the insert part (3b).

10. Treatment instrument according to claim 8 or 9,
**characterised in that**,
the filter cartridge (22) stands under a laterally outwardly directed spring tension, which upon its dismounting displaces or tilts the filter cartridge (22) outwardly, in particular upon pulling apart of the instrument parts or handpiece parts (3a, 3b).

## Revendications

1. a) Cartouche filtrante (22)
b) pour une conduite de fluide (11) s'étendant dans un instrument de traitement médical ou dentaire (1) entre son extrémité arrière et sa zone d'extrémité avant,
c) la cartouche filtrante (22) comportant un boîtier de cartouche tubulaire (26) dans lequel est placé un élément filtrant (21),
d) l'élément filtrant (21) ayant la forme d'une douille filtrante,
d1) qui est fermée à l'une de ses extrémités par une paroi frontale (21b)
d2) et qui, à son autre extrémité, dans la direction longitudinale de la cartouche filtrante (22), déborde d'un porte-filtre (21c) sous la forme d'une bride annulaire dont la forme circonférentielle et la taille sont adaptées à la forme et à la taille de la section transversale intérieure du boîtier de cartouche (26), et dans laquelle est insérée, et qui comporte un conduit de passage (32) relié à l'espace intérieur (30d) de la douille filtrante,
e) et la direction de passage du fluide étant orientée perpendiculairement à la paroi de la douille (21a).

2. Cartouche filtrante selon la revendication 1,
**caractérisée en ce que**
des pièces emboîtables de connexion, qui peuvent être ou qui sont reliées aux segments correspondants de la conduite de fluide (11), sont disposées aux extrémités du boîtier de cartouche filtrante (26).

3. Cartouche filtrante selon la revendication 2,
**caractérisée en ce que**
les pièces emboîtables de connexion sont formées, à une extrémité, par un pivot d'emboîtement (28) avec un conduit de passage (38) et, à l'autre extrémité, par un évidement d'emboîtement (34) ou par des évidements d'emboîtement (34) aux deux extrémités.

4. Cartouche filtrante selon la revendication 3,
**caractérisée en ce que**
la taille de la section transversale du pivot d'emboîtement (28) est inférieure à celle du boîtier de cartouche (26) et **en ce qu'**il est relié à la paroi périphérique du boîtier de cartouche (26) par une paroi frontale de boîtier (27).

5. Cartouche filtrante selon la revendication 3 ou 4,
**caractérisée en ce que**
l'évidement d'emboîtement (34) est formé par une paroi périphérique du boîtier de cartouche (26).

6. Cartouche filtrante selon l'une quelconque des revendications précédentes,
**caractérisée en ce que**
la paroi de la douille (21a) est constituée d'un matériau filtrant perméable au fluide, par exemple poreux, et/ou **en ce qu'**elle comporte des trous de passage (36) qui sont disposés les uns derrière les autres dans la direction longitudinale et répartis sur sa périphérie.

7. Instrument de traitement médical ou dentaire (1)
avec une conduite de fluide (11) s'étendant entre son extrémité arrière et sa zone d'extrémité avant, en particulier pour de l'eau ou un spray, et avec un boîtier de cartouche tubulaire remplaçable (26) dans lequel est placé un élément filtrant (21) pour la conduite de fluide (11),
**caractérisé par**
une cartouche filtrante (22) selon l'une quelconque des revendications précédentes, laquelle comporte le boîtier de cartouche (26) avec l'élément filtrant (21).

8. Instrument de traitement selon la revendication 7,
**caractérisé en ce**
**qu'**il comprend une partie de raccordement arrière (2) et une pièce à main avant (3) qui sont reliées de manière détachable l'une avec l'autre par un accouplement emboîtable (4),
l'accouplement emboîtable (4) étant formé entre la partie de raccordement (2) et une partie d'insertion (3b) dans la pièce à main (3), qui peut être reliée à la pièce à main (3) par une douille de connexion (3c) emboîtable par l'arrière et démontable par l'arrière, et qui, lorsque la douille de connexion (3c) est reculée vers l'arrière, est déplaçable axialement entre une position intermédiaire de montage arrière et une position finale avant,
un espace libre (23a) étant prévu dans la pièce à main avant (3) et/ou dans la partie d'insertion (3b), dont l'ouverture latérale (23b) est recouverte par la douille de connexion (3c) emboîtée, et qui est ouvert lorsque la douille de connexion (3c) est reculée vers l'arrière,
et la cartouche filtrante (22) à monter dans la conduite de fluide (11) pouvant être insérée dans l'espace libre (23a) et de nouveau enlevée à travers l'ouverture (23b).

9. Instrument de traitement selon la revendication 8,
**caractérisé en ce**
la conduite de fluide (11) s'étend à travers la partie d'insertion (3b) et une connexion emboîtable (24) est formée en amont entre la cartouche filtrante (22) et la partie d'insertion (3b).

10. Instrument de traitement selon la revendication 8 ou 9,
**caractérisé en ce**
la cartouche filtrante (22) est rappelée vers l'extérieur par un ressort latéral, qui décale ou renverse la cartouche filtrante (22) vers l'extérieur lors de son démontage, en particulier lorsque les éléments de l'instrument ou les éléments de la partie à main (3a, 3b) sont séparés les uns des autres.
